**Europäisches Patentamt**

**European Patent Office**

**Office européen des brevets**

(11) Numéro de publication: **0 306 583**
**A1**

## (12) DEMANDE DE BREVET EUROPEEN

(21) Numéro de dépôt: **87430009.8**

(22) Date de dépôt: **10.09.87**

(51) Int. Cl.⁴: **A01M 21/04 , A01M 15/00**

(43) Date de publication de la demande:
**15.03.89 Bulletin 89/11**

(84) Etats contractants désignés:
**ES GR IT**

(71) Demandeur: **Puech, Andre**
**13, rue jeanne d'Arc**
**F-30 470 Aimargues(FR)**

(72) Inventeur: **Puech, Andre**
**13, rue jeanne d'Arc**
**F-30 470 Aimargues(FR)**

(54) **Machine destinée à la destruction de toute végétation croissant au dessus du sol et notamment des fanes d'asperges.**

(57) La présente invention concerne une machine agricole destinée à la destruction de toute végétation croissant au-dessus du sol, telles que par exemple les fanes d'asperge.

La machine selon l'invention est constituée par un organe de coupe (1) des fanes, par un organe (2) de destruction des fanes par le feu et par un organe de translation (3) des fanes de la zone de coupe vers la zone de destruction, le dit organe (3) faisant office d'obturation entre les dites zones.

La machine selon l'invention peut etre tractée ou automotrice. Elle peut etre utilisée pour la destruction des fanes d'asperge ou toute autre type de végétation.

EP 0 306 583 A1

Fig 1

## Machine destinée à la destruction de toute végétation croissant au-dessus du sol, notamment les fanes d'asperge.

La présente invention concerne une machine destinée à la destruction de toute végétation croissant au-dessus du sol.

La présente invention concerne plus particulièrement une machine pour la destruction des fanes d'asperges.

Il est connu pour la destruction de la végétation, d'utiliser des broyeurs qui divisent la matière en particules.

Il est également connu de détruire la végétation par brulage.

Dans le premier cas, les particules de végétation tombent au sol et il peut y avoir transmission des parasites ou maladies dont étaient porteurs les végétaux broyés.

Dans le deuxième cas, il est possible d'éviter les inconvénients causés par le dépot sur le sol des végétaux.

Cependant, le brulage peut etre néfaste pour les pousses, racines ou autres contenues dans le sol.

Le problème se pose particulièrement, mais non spécifiquement dans la culture de l'asperge.

Les fanes d'asperges doivent etre détruites pour permettre l'obtention des pousses ou asperges.

Ces fanes sont les vecteurs de transport de maladies qui affaiblissent la souche et réduisent ses capacités de production dans le temps.

Le broyage communément utilisé n'apporte pas de solution à ce problème.

Le brulage des fanes sur le site de culture n'est pas davantage adapté car cette opération risque d'endommager la souche ou grif fe.

L'invention vise à obvier aux inconvénients sus-mentionnés en réalisant une machine destinée à la destruction sur le site de culture de la végétation parasite telles que les fanes d'asperges.

A cet effet, la machine selon l'invention qui est du type tractée, portée ou automotrice se caractérise en ce qu'elle est constituée par la combinaison d'un organe de coupe définissant une zone de coupe des fanes, d'un organe de destruction de fane par brulage définissant une zone de destruction et d'un organe de translation des fanes coupées d'une zone vers l'autre, le dit organe ayant également une fonction d'obturation entre les dites zones.

D'autres avantages et caractéristiques de l'invention apparaitront à la lecture de la description ci-après de formes de réalisation de l'invention données à titre d'exemple non limitatif et illustrée par les dessins joints, dans lesquels :

- la figure 1 est une vue schématique en coupe d'une forme de réalisation,

- la figure 2 est une vue de face de la machine selon la figure 1

- les figures 3 et 4 sont des vues de la machine suivant une autre forme de réalisation de l'invention.

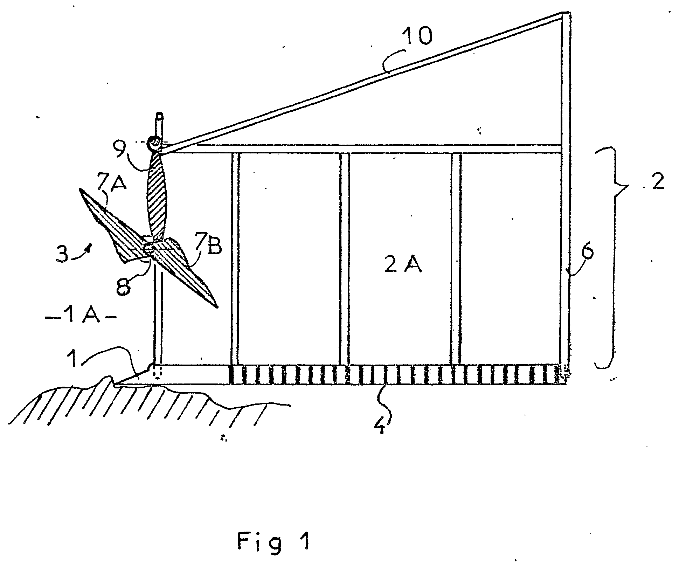

Telle que représentée en figure 1, la machine selon l'invention comprend un organe de coupe 1 au niveau duquel est définie la zone de coupe 1A, un organe de destruction 2 définissant une zone de destruction 2A et un organe 3 de translation et transport des fanes coupées de la zone de coupe vers la zone de destruction.

L'ensemble des organes et éléments d'actionnement de ceux-ci est porté par un chassis non représenté à la figure 1.

Ce chassis peut etre attelé avec moyen de roulement ou de glissement, porté ou automoteur.

L'organe de coupe 1 est une barre de coupe droite transversale et perpendiculaire au sens d'avancement de la machine.

Elle est actionnée de toute manière connue, soit par exemple au moyen d'une transmission reliée à la prise de force d'un véhicule tracteur, soit par exemple au moyen d'un moteur hydraulique.

Il va de soi qu'à la barre de coupe du type faucheuse peut etre substitué tout moyen équivalent adapté ou adaptable tels que des disques faucheurs ou autres.

L'organe de destruction est constitué par une chambre 2A qui reçoit les fanes et que est dotée d'un fond 4 totalement ou partiellement ajouré en forme de grille, de parois latérales 5 et d'une paroi transversale arrière 6 partiellement ou totalement ajourée en forme de grille.

L'organe 3 de translation et transport de fanes coupées de la zone 1A vers la zone 2A est constitué par au moins un volet mobile 7 suivant un mouvement cyclique de la zone 1A à la zone 2A.

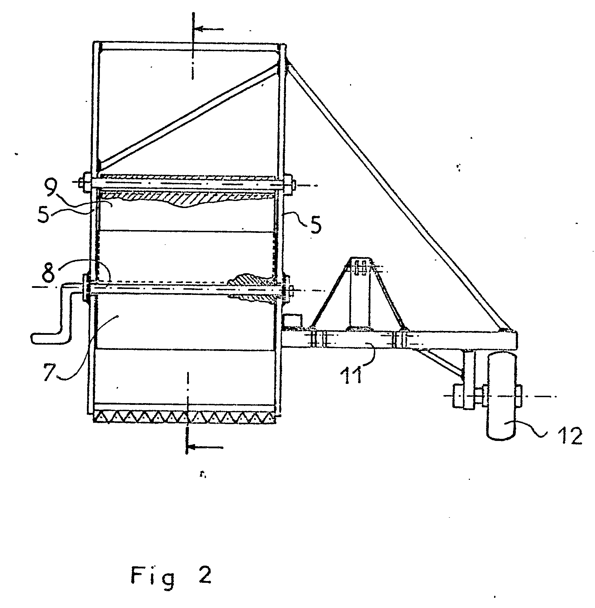

Selon l'invention, le volet 7 est constitué de deux parois transversales au sens d'avancement de la machine, parallèles à la barre de coupe et montées de préférence dans un meme plan de part et d'autre d'un axe 8 rotatif par tous moyens connus telle que par exemple la manivelle représentée à la figure 2.

Lors de l'avancement de la machine, les fanes du rang d'asperges sont sectionnées par la barre de coupe ; pendant ce sectionnement, une des parois 7A les rabat vers la barre de coupe puis les pousse vers la zone 2A, l'autre paroi 7B adoptant une position diamètralement opposée à la précédente en sorte que lorsque la paroi 7A est à la verticale de la barre de coupe, la paroi 7B soit au-dessus à la meme position en obturation entre les zones 1A et 2A.

Selon cette forme simplifiée de réalisation de l'invention, une paroi articulée 9 suivant un axe d'articulation supérieur et parallèle à l'axe 8, est fixée transversalement au sens d'avancement de la machine sur un montant supérieur de la chambre 2A dont l'ouverture correspond à la position de l'organe 3.

Cette paroi 9 est poussée vers l'extérieur pour le passage du volet 7A et reprend ensuite sa position jusqu'au passage du volet 7B.

La chambre 2A est de préférence dotée d'une paroi 10 formant toit et elle peut etre dotée d'un bruleur non représenté, alimenté par exemple par une bombone de gaz pour mettre le feu aux premières fanes coupées, les autres prenant le feu par contact avec les premières et les cendres tombent au sol.

La figure 2 est une vue de face de la machine selon la figure 1 avec représentation du chassis support 11 doté d'un arrimage à l'attelage en trois points d'un véhicule tracteur et d'une roue 12.

Une roue peut également etre montée de manière à etre réglable en position ou escamotable latéralement à la chambre 2A de l'autre coté de la machine par rapport à la roue 12, soit pour régler la hauteur de travail par rapport au sol, soit pour faciliter le déplacement sur route et accroitre la stabilité.

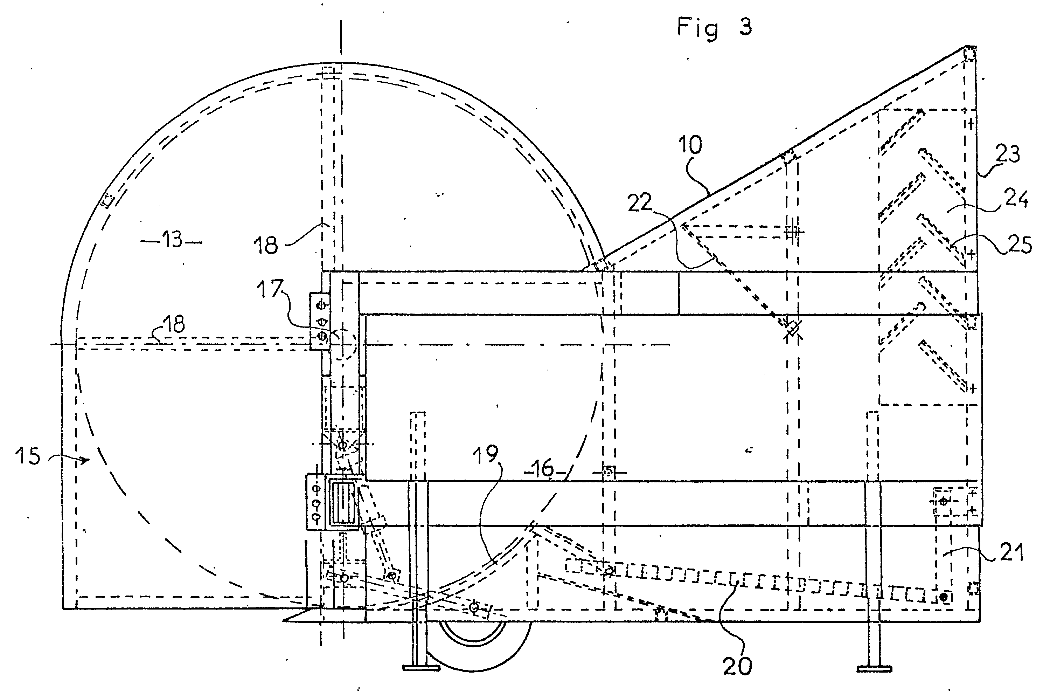

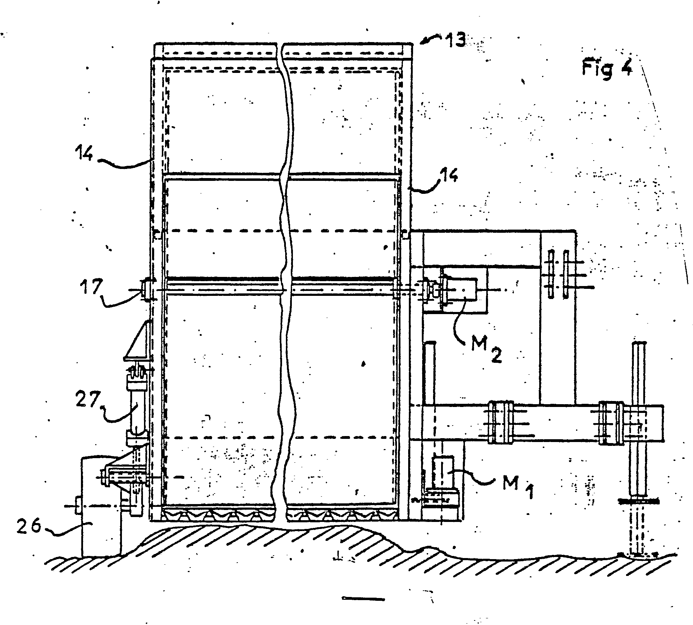

Aux figures 3 et 4 est représentée une autre forme de réalisation de l'invention comprenant comme la précédente un organe de coupe 1, avec zone de coupe 1A, un organe 2 ou chambre de destruction 2A, un dispositif 3 de translation des fanes et d'obturation, l'ensemble étant porté par un chassis avec arrimage à l'attelage en trois points d'un véhicule tracteur.

Selon cette forme de réalisation, le dispositif 3 est constitué par un tambour 13 monté sur le chassis au-dessus de la barre de coupe actionnée par un moteur hydraulique M1, constitué de deux joues 14 parallèles réunies par une paroi en arc-de-cercle ménageant une entrée 15 en avant de la barre de coupe et une sortie 16 à l'arrière de celle-ci.

Dans le tambour 15 est monté un axe central 17 entre les joues 14 entrainé en rotation par un moteur hydraulique M2.

Sur l'axe 17 sont fixées quatre parois 18 transversales au tambour et au sens d'avancement de la machine formant pale.

Les quatre parois sont disposées à 90° les unes des autres.

Selon une forme non représentée de réalisation de l'invention, elles sont non planes, comme représenté mais incurvées.

Lors de la rotation de l'axe 17, au moins une paroi 18 est nécessairement en position d'obturation de l'ouverture arrière du tambour tandis qu'une autre paroi 18 rabat les fanes vers la barre de coupe puis les pousse vers la chambre 2A.

La chambre 2A est dotée au niveau de la sortie 16 du tambour d'une rampe 18 inclinée en arc-de-cercle et d'un fond 10 constitué par une grille vibrante sur ses supports 21 par tous moyens connus pour l'évacuation des cendres.

En partie supérieure de la chambre 2A est monté un déflecteur 22 transversal qui reçoit les fanes projetées par la rotation des pales 18 sur la rampe 19 et les dévie vers la grille constituant le fond 20.

La chambre 2A est dotée d'un toit 10 et son fond transversal est doté d'une ouverture 23 d'évacuation des fumées.

En amont de cette ouverture est montée dans la chambre 2A une cheminée interne 24 avec chicane 25 pour éviter une propagation des flammes à l'extérieur.

Le chassis de la machine est porté par une roue 26 avec vérin 27 pour escamoter la dite roue ou régler la hauteur de travail de la machine.

Selon cette forme de réalisation de l'invention, les joues 14 contribuent avec les pales 17 à assurer une étancheité constante entre la zone de coupe 1A comprise entre elles et la zone de destruction par brulage.

Il va de soi que la machine selon l'invention peut etre simplifiée par suppression du dispositif transporteur 3, les fanes cou pées étant poussées vers la chambre 2 par avancement de la machine.

La machine selon l'invention peut recevoir des aménagements et des variantes dans le domaine des équivalents techniques sans pour autant sortir du cadre du présent brevet.

## Revendications

R1/ Machine destinée à la destruction de toute végétation croissant au-dessus du sol telles que notamment les fanes d'asperge, caractérisée en ce qu'elle est constituée par :
- un organe (1) de coupe des fanes définissant une zone de coupe (1A),
- au moins un organe (2) de destruction des dites fanes coupées définissant une zone de destruction (2A).

R2/ Machine selon la revendication 1 caractérisée en ce qu'elle est constituée par :
- un organe (1) de coupe des fanes,
- au moins un organe (2) de destruction des dites fanes coupées,
- au moins un organe (3) de transport et de translation des fanes coupées vers l'organe de destruction intercalé entre les deux précédents.

R3/ Machine selon la revendication 1 et la revendication 2 caractérisée en ce que l'organe (2) de destruction des fanes est un moyen de destruction par le feu.

R4/ Machine selon la revendication 1, la revendication 2 et la revendication 3 caractérisée en ce que l'organe (3) de transport et translation des fanes coupées est aussi un organe d'obturation de la communication entre la zone de coupe et la zone de destruction.

R5/ Machine selon la revendication 1 caractérisée en ce que l'organe de coupe (1) est une barre de coupe transversale au sens d'avancement de la machine.

R6/ Machine selon la revendication 1 et la revendication 3 caractérisée en ce que l'organe de destruction par le feu est une chambre (2A) formant foyer présentant au moins une paroi inférieure ajourée.

R7/ Machine selon la revendication 1, la revendication 2 et la revendication 4 caractérisée en ce que l'organe de translation et d'obturation est constitué par au moins une paroi (7) à mouvement cyclique de passage dans la zone de coupe (1A) et dans la zone de destruction (2A).

R8/ Machine selon la revendication 1 et la revendication précédente caractérisée en ce que l'organe de translation est constitué par deux parois (7A), (7B) disposée dans un meme plan sur un axe (8) parallèle à la barre coupe et au-dessus de celle-ci.

R9/ Machine selon la revendication 1 et les revendications 7 et 8 caractérisée en ce que au-dessus de l'axe (8) est montée une paroi (9) verticale articulée en position supérieure.

R10/ Machine selon la revendication 1 et la revendication 2 caractérisée en ce que l'organe de translation (3) des fanes coupées est constitué par un tambour (13) monté au-dessus de la barre de coupe (1) avec entrée (15) et sortie (16) vers la chambre (2A) dans lesquelles font rotation des pales (18).

R11/ Machine selon la revendication 1, la revendication 2 et la revendication précédente caractérisée par une rampe (19) inclinée à la base du tambour et au niveau de l'entrée (16) et par un déflecteur (22) dans la chambre (2A).

R12/ Machine selon la revendication 1 caractérisée en ce que le fond ajouré (20 ou 4) de la chambre (2A) est vibrant.

R13/ Machine selon la revendication 1 caractérisée par une cheminée (24) avec chicane (25)

Fig 1

Fig 2

Fig 3

Fig 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | DE-A-2 101 026 (H. VISSERS N.V.)<br>* Page 5, ligne 7 - page 6, ligne 21; figures 5-7 * | 1-3 | A 01 M 21/04<br>A 01 M 15/00 |
| A | | 4,5,7 | |
| | --- | | |
| A | NL-A-8 303 505 (A.C. VAN 'T ROOD) | | |
| | --- | | |
| A | NL-A-8 102 318 (B.V. BORST) | | |
| | ----- | | |

DOMAINES TECHNIQUES
RECHERCHES (Int. Cl.4)

A 01 M
A 01 D

Le présent rapport de recherche a été établi pour toutes les revendications

| Lieu de la recherche | Date d'achèvement de la recherche | Examinateur |
|---|---|---|
| LA HAYE | 11-11-1987 | NEHRDICH H.J |